(19) **Europäisches Patentamt European Patent Office Office européen des brevets**

(11) **EP 4 769 648 A1**

(12) **EUROPEAN PATENT APPLICATION**
published in accordance with Art. 153(4) EPC

(43) Date of publication:
01.07.2026 Bulletin 2026/27

(21) Application number: 25857385.6

(22) Date of filing: 19.08.2025

(51) International Patent Classification (IPC):
$H01M\ 10/54^{(2006.01)}$ $\quad C22B\ 3/12^{(2006.01)}$
$C22B\ 3/22^{(2006.01)}$ $\quad C22B\ 21/00^{(2006.01)}$
$C22B\ 26/12^{(2006.01)}$ $\quad B02C\ 23/16^{(2006.01)}$
$H01M\ 4/58^{(2010.01)}$

(52) Cooperative Patent Classification (CPC):
B02C 23/16; C22B 3/12; C22B 3/22; C22B 21/00;
C22B 26/12; H01M 4/58; H01M 10/54; Y02W 30/84

(86) International application number:
PCT/KR2025/012560

(87) International publication number:
WO 2026/043249 (26.02.2026 Gazette 2026/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.08.2024 KR 20240111100
18.08.2025 KR 20250114142

(71) Applicant: LG ENERGY SOLUTION, LTD.
Seoul 07335 (KR)

(72) Inventors:
• KWON,Ohsung
Yuseong-gu Daejeong 34122 (KR)

• YU, Hyemin
Yuseong-gu Daejeong 34122 (KR)
• KIM, Donghyeon
Yuseong-gu Daejeong 34122 (KR)
• NOH, Taechong
Yuseong-gu Daejeong 34122 (KR)
• LEE, Dongseok
Yuseong-gu Daejeong 34122 (KR)
• LEE, Jeongbae
Yuseong-gu Daejeong 34122 (KR)

(74) Representative: Hoffmann Eitle
Patent- und Rechtsanwälte PartmbB
Arabellastraße 30
81925 München (DE)

(54) **METHOD FOR REMOVING ALUMINUM FROM WASTE CATHODE MATERIAL**

(57) The present invention relates to a method of removing aluminum from a waste cathode material, the method including step (a) of pulverizing a waste cathode coated with a cathode active material layer containing a cathode material with an olivine structure on a current collector; step (b) of obtaining the cathode active material layer as a powder by sieving the pulverized waste cathode through a 140- to 400-mesh sieve; step (c) of forming a leachate and a leaching residue by leaching the obtained cathode active material layer powder in an alkaline aqueous solution having a molar concentration of 0.06 to 0.22 mol/L; and step (d) of separating the leachate and the leaching residue, wherein in step (c), the solid-to-liquid ratio of the cathode active material layer powder to the alkaline aqueous solution is 1 g/7 ml to 1 g/35 ml.

According to the method of removing aluminum from a waste cathode material of the present invention, by forming a leachate and a leaching residue by leaching, in a predetermined alkaline aqueous solution, a cathode material powder having an olivine structure obtained from a cathode of a waste lithium-ion battery and separating the leachate and the leaching residue, lithium loss from the cathode material powder having an olivine structure may be minimized, and the aluminum removal rate may be increased, thereby greatly increasing the purity of the recovered lithium.

[FIG. 1]

S10 — **WASTE CATHODE**

↓

S20 — **PULVERIZING**

↓

S30 — **SIEVING**

↓

S40 — **LEACHING IN ALKALINE AQUEOUS SOLUTION**

↓

S50 — **SEPARATION**

↓

S60 — **AL-DISSOLVED LEACHATE**        **LEACHING RESIDUE** — S70

↓

**LITHIUM RECOVERY**

**Description**

[Technical Field]

[Cross-Reference to Related Applications]

This application claims priority to Korean Patent Application No. 10-2024-0111100, filed on August 20, 2024, and Korean Patent Application No. 10-2025-0114142, re-filed on August 18, 2025, based on the priority of the above patent, in the Korean Intellectual Property Office, the disclosures of each of which are incorporated herein by reference.

The present invention relates to a method of removing aluminum from a waste cathode material, characterized in that aluminum, which is a current collector component mixed in a step of pulverizing a waste cathode to obtain a cathode active material layer in powder form, is leached and removed in a predetermined alkaline aqueous solution, thereby enabling recovery as high-purity lithium with excellent economic efficiency.

[Background Art]

Demand for lithium-ion batteries has been steadily increasing along with the portable electronic device market since the 1990s, and has recently been increasing further worldwide due to the rapid expansion of the electric vehicle market. This trend could lead to instability in the supply and demand of lithium resources in the near future, and the continuous accumulation of waste batteries could cause major environmental problems. To solve these problems, recycling of used lithium-ion batteries is a very important technological challenge.

A lithium-ion battery is largely composed of a cathode formed by coating a metal foil such as aluminum with a cathode active material layer, an anode formed by coating a metal foil such as copper with an anode active material layer, a separator that prevents the cathode and anode from mixing, and an electrolyte solution that allows lithium ions to move between the cathode and anode.

A cathode accounts for more than 60 % of the cost of a lithium-ion battery. Lithium cobalt oxide ($LiCoO_2$) is used as the cathode because the lithium cobalt oxide has excellent reversibility, low self-discharge rate, high capacity, and high energy density, and is easy to synthesize. Alternatively, to reduce the use of expensive cobalt, lithium complex oxides containing Ni, Mn, and the like, such as lithium nickel cobalt manganese oxide ($LiNiMnCoO_2$), lithium manganese oxide ($LiMnO_2$), and lithium iron phosphate ($LiFePO_4$), are used. Since the cathode material contains about 5 to 7 % lithium, a method of recovering lithium from cathode materials of waste lithium-ion batteries is receiving significant attention.

A hydrometallurgical method is used to recover valuable metals from lithium iron phosphate ($LiFePO_4$), which is known for its highly stable olivine crystal structure. The process begins by pulverizing a waste cathode, which consists of a cathode active material layer (containing lithium iron phosphate, a binder, and carbon) coated on an aluminum current collector. This step yields a powder of the cathode active material layer. Subsequently, this powder is treated with a highly concentrated strong acid or strong base to recover lithium (Li), iron (Fe), and phosphorus (P) as respective compounds thereof. However, a problem arises during this pulverization process: the aluminum current collector is mixed with the cathode active material powder, which reduces the purity of the recovered lithium.

Therefore, it is necessary to develop a method for increasing the purity of recovered lithium by removing aluminum from the current collector that gets mixed into the cathode active material powder during the pulverization of waste lithium-ion battery cathodes.

[Related Art Documents]

[Patent Documents]

KR 2007-0112278 A

[Disclosure]

[Technical Problem]

Therefore, the present invention has been made in view of the above problems, and it is one object of the present invention to provide a method of removing aluminum from a waste cathode material. According to the method of the present invention, by sieving cathode material powder, which has an olivine structure and is obtained by pulverizing a waste lithium-ion battery cathode, through a predetermined mesh to create a uniform particle size, and then leaching the powder in a predetermined alkaline aqueous solution to form and subsequently separate a leachate and a leaching residue, the aluminum removal rate may be increased while minimizing lithium loss from the waste cathode material powder with an olivine structure, and thus the purity and yield of the recovered lithium may be significantly improved.

The above and other objects can be accomplished by the present invention described below.

[Technical Solution]

I) In accordance with one aspect of the present invention, provided is a method of removing aluminum from a waste cathode material, the method including (a) pulverizing a waste cathode coated with a cathode active material layer containing a cathode material with an olivine structure on a current collector; (b) obtaining the cathode active material layer as a powder by sieving the pulverized waste cathode; (c) forming a leachate and a leaching residue by leaching the obtained cathode active material layer powder in an alkaline aqueous solution; and (d) separating the leachate and the leaching residue.

II) In accordance with another aspect of the present invention, provided is a method of removing aluminum from a waste cathode material, the method including (a) pulverizing a waste cathode coated with a cathode active material layer containing a cathode material with an olivine structure on a current collector; (b) obtaining the cathode active material layer as a powder by sieving the pulverized waste cathode through a 140- to 400-mesh sieve; (c) forming a leachate and a leaching residue by leaching the obtained cathode active material layer powder in an alkaline aqueous solution having a molar concentration of 0.06 to 0.22 mol/L; and (d) separating the leachate and the leaching residue, wherein in step (c), a solid-to-liquid ratio of the cathode active material layer powder to the alkaline aqueous solution is 1 g/7 ml to 1 g/35 ml.

III) According to I) or II), the cathode material having an olivine structure may be a compound represented by Chemical Formula 1 below.

$$[\text{Chemical Formula 1}] \quad Li_{1+a}Fe_{1-b}M_b(PO_{4-c})X_c,$$

wherein Chemical Formula 1, M includes one or more elements selected from the group consisting of Al, Mg, Ni, Co, Mn, Ti, Ga, Cu, V, Nb, Zr, Ce, In, Zn, and Y; X includes one or more elements selected from the group consisting of F, S, and N; and a, b, and c are $-0.5 \leq a \leq 0.5$, $0 \leq b \leq 0.5$, and $0 \leq c \leq 0.1$, respectively.

IV) According to I) to III), the cathode material having an olivine structure may include lithium iron phosphate.

V) According to I) to IV), the pulverizing in step (a) may be performed using a hand mill, a pin mill, a disc mill, a cutting mill, a hammer mill, a mixer, or a blender.

VI) According to I) to V), the sieving in step (b) may be performed using a sieve-equipped particle size sorter.

VII) According to I) to VI), the cathode active material layer powder obtained in step (b) may have a particle size of 35 to 107 $\mu$m.

VIII) According to I) to VII), the alkaline aqueous solution in step (c) may include one or more selected from the group consisting of sodium hydroxide (NaOH), potassium hydroxide (KOH), ammonium hydroxide (NH$_4$OH), and calcium hydroxide (Ca(OH)$_2$).

IX) According to I) to VIII), the alkaline aqueous solution may have a pH of 12 or more.

X) According to I) to IX), the leaching in step (c) may be performed at a stirring speed of 100 to 500 rpm.

XI) According to I) to X), the leaching in step (c) may be performed at a temperature of 15 to 40 °C.

XII) According to I) to XI), the leaching in step (c) may be performed for 30 minutes to 120 minutes.

XIII) According to I) to XII), separation of the leachate and the leaching residue in step (d) may be performed using reduced pressure filtration.

XIV) According to I) to XIII), in step (d), the separated leachate may have an aluminum leaching rate of 80 % by weight or more and a lithium leaching rate of 10 % by weight or less.

XV) According to I) to XIV), the method may include (e) recovering lithium from the leaching residue separated in step (d).

XVI) In accordance with yet another aspect of the present invention, provided is lithium recovered in the step of recovering lithium according to XV).

[Advantageous Effects]

According to the present invention, by pulverizing a waste cathode having a cathode active material layer containing an olivine-structured cathode material coated on an aluminum current collector to obtain the cathode active material layer in the powder form, then sieving the cathode active material layer powder to a predetermined, uniform particle size, and subsequently removing the incorporated aluminum from the current collector by leaching with a low-concentration alkaline aqueous solution, the removal rate of aluminum from the cathode active material layer powder can be increased while lithium loss is minimized, thereby improving the purity and yield of the recovered lithium. Additionally, reducing wastewater generation can significantly improve economic efficiency and eco-friendliness.

[Description of Drawings]

The drawings attached to this specification illustrate embodiments of the present invention and, together with the detailed description given below, serve to further understand the technical idea of the present invention. Therefore, the present invention should not be construed as being limited to the matters described in these drawings.

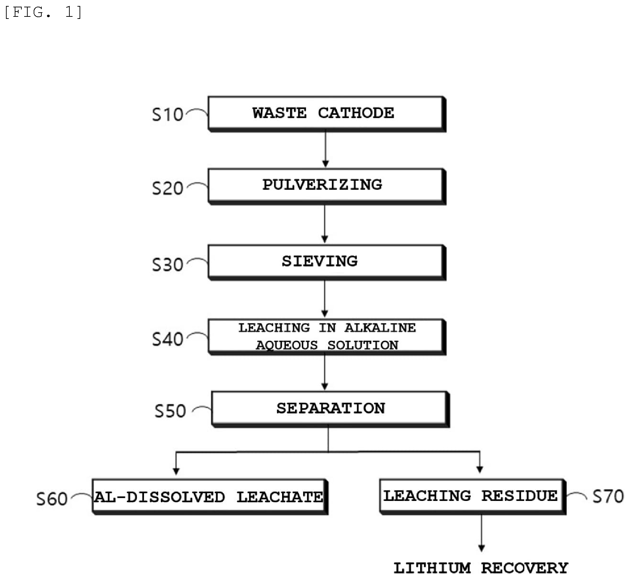

FIG. 1 is a flowchart illustrating a method for removing aluminum from a waste cathode material, according to one embodiment of the present invention.

[Best Mode]

The present inventors confirmed that, while researching a method of removing aluminum, which is a component of a current collector that gets incorporated during the process of obtaining a cathode active material layer in the power form, by pulverizing a waste cathode having the cathode active material layer containing a cathode material having an olivine structure on an aluminum current collector, when the cathode active material layer powder was sieved through a predetermined mesh to obtain a powder with a uniform particle size within a desired range, and a low-concentration alkaline aqueous solution was then introduced, the aluminum was leached out and easily removed, the purity and yield of lithium were significantly improved, and wastewater generation was reduced. Based on these results, the present inventors conducted further studies to complete the present invention.

Hereinafter, a method of removing aluminum from a waste cathode material according to the present invention will be described in detail.

The terms and words which are used in the present specification and the appended claims should not be construed as being confined to common meanings or dictionary meanings but should be construed as having meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

## Method of removing aluminum from a waste cathode material

A method of removing aluminum from a waste cathode material of the present invention includes step (a) of pulverizing a waste cathode coated with a cathode active material layer containing a cathode material with an olivine structure on a current collector; step (b) of obtaining the cathode active material layer as a powder by sieving the pulverized waste cathode; step (c) of forming a leachate and a leaching residue by leaching the obtained cathode active material layer powder in an alkaline aqueous solution; and step (d) of separating the leachate and the leaching residue. In this case, the purity of lithium may be increased and economic efficiency may be improved by easily leaching and removing aluminum, a current collector component mixed in the process of pulverizing the waste cathode.

The method of removing aluminum from a waste cathode material of the present invention includes step (a) of pulverizing a waste cathode coated with a cathode active material layer containing a cathode material with an olivine structure on a current collector; step (b) of obtaining the cathode active material layer as a powder by sieving the pulverized waste cathode through a 140- to 400-mesh sieve; step (c) of forming a leachate and a leaching residue by leaching the obtained cathode active material layer powder in an alkaline aqueous solution having a molar concentration of 0.06 to 0.22 mol/L; and step (d) of separating the leachate and the leaching residue. In step (c), the solid-to-liquid ratio of the cathode active material layer powder to the alkaline aqueous solution is 1 g/7 ml to 1 g/35 ml. In this case, the purity of lithium may be increased and economic efficiency may be improved by easily leaching and removing aluminum, a current collector component mixed in the process of pulverizing the waste cathode.

Hereinafter, each step of the method of removing aluminum from a waste cathode material will be described in detail.

## (a) Pulverizing a waste cathode coated with a cathode active material layer containing a cathode material with an olivine structure on a current collector

The method of removing aluminum from a waste cathode material of the present invention includes step (a) of pulverizing a waste cathode coated with a cathode active material layer containing a cathode material with an olivine structure on a current collector. In this case, the current collector may be easily separated from the waste cathode material.

In the present disclosure, the olivine structure refers to a type of cathode material structure characterized by a cubic lattice arrangement in a three-dimensional form, in which phosphorus-oxygen (P-O) is strongly linked, enabling the structure to maintain the integrity thereof even when all lithium ions are removed. This results in less performance degradation during charge and discharge cycles and provides excellent thermal stability. In addition, while the olivine structure is economically advantageous due to the use of inexpensive iron instead of costly cobalt, the energy density, electrical conductivity, and lithium-ion diffusivity thereof are lower compared to other cathode materials.

The olivine structure may be confirmed by X-ray diffraction analysis (XRD).

The cathode material in this description may include a cathode active material or may be a cathode active material.

For example, the cathode material having an olivine structure may be a compound represented by Chemical Formula 1 below. In this case, high-temperature stability, lifespan characteristics, and economic efficiency may be excellent.

[Chemical Formula 1] $\quad\quad Li_{1+a}Fe_{1-b}M_b(PO_{4-c})X_c$

(In Chemical Formula 1, M includes one or more elements selected from the group consisting of Al, Mg, Ni, Co, Mn, Ti, Ga, Cu, V, Nb, Zr, Ce, In, Zn, and Y; X includes one or more elements selected from the group consisting of F, S, and N; and a, b, and c are $-0.5 \leq a \leq 0.5$, $0 \leq b \leq 0.5$, and $0 \leq c \leq 0.1$, respectively)

For example, the cathode material having an olivine structure may include lithium iron phosphate. In this case, high-temperature stability, lifespan characteristics, and economic efficiency may be excellent.

The lithium iron phosphate may preferably include $LiFePO_4$ having an olivine structure. In this case, high-temperature stability, lifespan characteristics, and economic efficiency may be excellent.

For example, the cathode material powder may be obtained by crushing a cathode of a waste lithium-ion battery and separating cathode material powder and a current collector. In this case, economic benefits may be achieved because expensive lithium, $FePO_4$, and the like may be recovered and recycled.

For example, the cathode of the waste lithium-ion battery may be a discarded lithium-ion battery cathode, a defective product generated during a cathode coating process, or cathode scrap discarded after cutting an electrode plate, preferably a discarded lithium-ion battery cathode. In this case, economic benefits may be achieved because expensive lithium, $FePO_4$, and the like may be recovered and recycled.

Before pulverizing the cathode of the waste lithium-ion battery, a crushing step, which involves cutting or shredding a discarded lithium-ion battery cathode, may be performed. In this case, powderization may be facilitated.

For example, the pulverizing may be performed using a hand mill, a pin mill, a disc mill, a cutting mill, a hammer mill, a mixer, or a blender, preferably a mixer. In this case, current collector pieces may be chopped into small pieces, and cathode material may be separated from the current collector pieces.

(b) Obtaining the cathode active material layer as a powder by sieving the pulverized waste cathode through a 140- to 400-mesh sieve

The method of removing aluminum from a waste cathode material of the present invention includes step (b) of obtaining the cathode active material layer as a powder by sieving the pulverized waste cathode through a 140- to 400-mesh sieve. In this case, the powder is easy to handle and mixes well with a leaching solvent. Furthermore, the increased surface area of aluminum within the powder facilitates aluminum leaching even in a low-concentration alkaline aqueous solution in the subsequent leaching step, thereby reducing wastewater generation.

The sieve may be preferably 160 to 330 mesh, more preferably 180 to 300 mesh, still more preferably 180 to 270 mesh, still more preferably 180 to 230 mesh. Within this range, the particle size of the powder becomes uniform and decreases, and as the surface area of aluminum increases, aluminum leaching in an alkaline aqueous solution may be further promoted. Specifically, when the mesh size exceeds 400, the particle size of the powder is significantly reduced, so the amount of cathode active material remaining on the sieve is greater than the amount of cathode active material obtained as powder, thereby reducing economic efficiency. In addition, in the subsequent leaching step, the powder does not mix easily with the alkaline aqueous solution and floats, resulting in low aluminum leaching efficiency and a considerably longer leaching time. On the other hand, when the mesh size is less than 140, the particle size of the powder increases and the surface area of aluminum within the particle decreases, which reduces the aluminum leaching efficiency in a low-concentration alkaline aqueous solution, and thus, leaching takes a long time.

For example, the sieving in step (b) may be performed using a sieve-equipped particle size sorter. In this case, a current collector may be separated from the pulverized waste cathode material, and thus the cathode active material layer may be obtained as a powder.

For example, the cathode active material layer powder obtained in step (b) may have a particle size of 35 to 107 $\mu$m, preferably 43 to 96 $\mu$m, more preferably 46 to 84 $\mu$m, still more preferably 53 to 84 $\mu$m, still more preferably 65 to 84 $\mu$m. Within this range, the surface area of aluminum within the powder particles increases, thereby increasing the aluminum leaching rate even in a low-concentration alkaline solution, minimizing the lithium leaching rate, shortening the leaching time, and reducing wastewater generation.

The particle size of the cathode active material layer powder may be measured using a method commonly practiced in the technical field, specifically by sieving with a sieve.

(c) Forming a leachate and a leaching residue by leaching the obtained cathode active material layer powder in an alkaline aqueous solution having a molar concentration of 0.06 to 0.22 mol/L

The method of removing aluminum from a waste cathode material of the present invention includes step (c) of forming a leachate and a leaching residue by leaching the obtained cathode active material layer powder in an alkaline aqueous solution having a molar concentration of 0.06 to 0.22 mol/L. The solid-to-liquid ratio of the cathode active material layer powder to the alkaline aqueous solution may be 1 g/7 ml to 1 g/35 ml. In this case, the purity and yield of lithium may be increased because aluminum, which is a current collector component mixed in the process of pulverizing the waste cathode, is leached into the leachate and separated and removed in the subsequent process.

For example, the alkaline aqueous solution in step (c) may include one or more selected from the group consisting of sodium hydroxide (NaOH), potassium hydroxide (KOH), ammonium hydroxide (NH$_4$OH), and calcium hydroxide (Ca(OH)$_2$), preferably sodium hydroxide, ammonium hydroxide, or a mixture thereof. In this case, since aluminum mixed in the cathode active material layer powder during the waste cathode pulverizing step is selectively leached into the alkaline aqueous solution and removed, the purity of lithium may be increased in the subsequent process to recover lithium.

In the present disclosure, leaching refers to the process of dissolving soluble substances to remove the solution and separate the soluble and insoluble components.

For example, the alkaline aqueous solution in step (c) may have a molar concentration of 0.06 to 0.22 mol/L, preferably 0.09 to 0.20 mol/L, more preferably 0.09 to 0.17 mol/L, still more preferably 0.09 to 0.15 mol/L, still more preferably 0.09 to 0.13 mol/L. Within this range, since aluminum incorporated into the cathode active material layer powder during the waste cathode pulverizing step is selectively leached and easily removed in a low-concentration alkaline aqueous solution, lithium leaching may be minimized, thereby increasing lithium purity and yield. Specifically, at concentrations lower than 0.06 molar concentration, the equivalence ratio for leaching aluminum is not sufficient, so aluminum is not sufficiently leached. On the other hand, at high concentrations exceeding 0.22 molar concentration, the viscosity of the alkaline aqueous solution increases, making it difficult for the cathode active material layer powder to mix easily with the alkaline aqueous solution, and lithium is leached in addition to aluminum. Consequently, the lithium yield may decrease, wastewater generation may increase, and process costs may increase.

For example, the alkaline aqueous solution may have a pH of 12 or more, preferably pH 12.5 or more, more preferably pH 12.5 to 14, still more preferably pH 12.5 to 13.5. In this case, since aluminum mixed in the cathode active material layer powder during the waste cathode pulverizing step is selectively leached into the alkaline aqueous solution and removed, the purity of lithium may be increased.

In the present disclosure, pH may be measured by a measurement method commonly used in the technical field to which the present invention belongs. Unless otherwise specified, pH may be measured using a general pH measuring device at room temperature. Specifically, Thermo Scientific Orion Star A Series may be used.

In the present disclosure, room temperature may be any point within the range of 20 $\pm$ 5 °C.

For example, the solid-to-liquid ratio of the cathode active material layer powder to the alkaline aqueous solution may be 1 g/7 ml to 1 g/35 ml, preferably 1 g/9 ml to 1 g/27 ml, more preferably 1 g/9 ml to 1 g/20 ml, still more preferably 1 g/9 ml to 1 g/15 ml. Within this range, since aluminum mixed in the cathode active material layer powder during the waste cathode pulverizing step is selectively leached into the alkaline aqueous solution and removed, the purity of lithium may be increased, and wastewater generation may be reduced.

In the present disclosure, the solid-to-liquid ratio refers to the ratio of solid to liquid, and is a value obtained by dividing the weight of solid by the volume of liquid, i.e., a value obtained by dividing the content (g) of cathode material powder by the volume (mL) of alkaline aqueous solution.

For example, the leaching in step (c) may be performed under stirring. In this case, the leaching time may be shortened.

For example, the stirring speed may be 100 to 500 rpm, preferably 200 to 400 rpm, more preferably 250 to 350 rpm. Within this range, aluminum incorporated into the cathode active material layer powder during the waste cathode pulverizing step may be sufficiently leached into the alkaline aqueous solution, and the leaching time may be shortened.

For example, the leaching in step (c) may be performed at a temperature of 15 to 40 °C, preferably 20 to 35 °C, more preferably 20 to 30 °C. Within this range, aluminum incorporated into the cathode active material layer powder during the waste cathode pulverizing step may be sufficiently leached into the alkaline aqueous solution, and the leaching time may be shortened.

For example, the leaching in step (c) may be performed for 30 minutes to 120 minutes, preferably 30 minutes to 100 minutes, more preferably 50 minutes to 80 minutes. Within this range, aluminum incorporated into the cathode active material layer powder during the waste cathode pulverizing step may be sufficiently leached into the alkaline aqueous solution, and the leaching time may be shortened.

(d) Separating the leachate and the leaching residue

The method of removing aluminum from a waste cathode material of the present invention may include step (d) of separating the leachate and the leaching residue. In this case, by obtaining a leaching residue from which aluminum is selectively removed, the purity of lithium in the subsequent process to recover lithium may be increased, resulting in excellent economic efficiency.

For example, separation of the leachate and the leaching residue in step (d) may be performed using reduced pressure filtration. In this case, the leachate and the leaching residue may be easily separated using a simple process, reducing process costs and providing the advantage of eco-friendliness.

The reduced pressure filtration may preferably be vacuum filtration, and specifically vacuum filtration using a filtration flask. In this case, the leachate and the leaching residue may be easily separated.

In the present disclosure, vacuum filtration commonly used in the technical field to which the present invention belongs may be used in the present invention without particular limitation. For example, vacuum filtration may include filtration under a partial vacuum or low pressure.

For example, the leachate may include aluminum. In this case, high-purity lithium may be recovered by leaching and removing aluminum, which is a current collector component mixed in the cathode active material layer powder during the process of pulverizing the waste cathode.

For example, the leaching residue may include a cathode active material layer. In this case, high-purity lithium may be recovered from the leaching residue, which increases economic benefits and has the advantage of recycling resources.

For example, the separated leachate in step (d) may have an aluminum leaching rate of 80 % by weight or more, preferably 82 % by weight or more, more preferably 84 % by weight or more, still more preferably 84 to 95 % by weight. Within this range, the purity of lithium in the subsequent process may be increased because aluminum, which is a current collector component mixed in the process of pulverizing the waste cathode, is removed.

For example, the separated leachate in step (d) may have a lithium leaching rate of 10 % by weight or less, preferably 8 % by weight or less, more preferably 6 % by weight or less. Within this range, lithium loss in the cathode active material layer powder is minimized, which may increase the recovery rate of lithium in subsequent processes.

In the present disclosure, the aluminum removal rate from the leachate may be measured by any measurement method commonly used in the art to which the present invention belongs, for example, by ICP analysis. Specifically, 0.2 g of leachate is collected and placed in a conical tub. Then, the exact weight of the leachate is measured. Then, 0.1 ml of 70 % by weight nitric acid is added thereto, 500 $\mu$l of 1000 mg/kg internal STD (Sc) is added thereto, and the volume of the mixture is adjusted to 50 ml with ultrapure water. Then, the aluminum removal rate from the leachate is measured by ICP. At this time, when necessary, the sample concentration may be further diluted with ultrapure water to fall within the standard material calibration curve. In addition, the aluminum content contained in the cathode material powder may be measured by ICP analysis in the above-described manner, and the aluminum leaching rate may be calculated by Equation 1 below.

Aluminum leaching rate (wt%) = [Aluminum content in leachate (g) / Aluminum content in cathode material powder (g)] $\times$ 100     [Equation 1]

The method of removing aluminum from a waste cathode material of the present invention may include step (e) of recovering lithium from the leaching residue separated in step (d).

The separated leaching residue in step (e) may include a cathode active material. For example, the step of recovering lithium may include dissolving the leaching residue in a basic solution or an acidic solution.

Preferably, in step (e), lithium may be recovered from the leached leachate by dissolving the separated leaching residue in an acidic solution and then adding an oxidizing agent.

For example, the acidic solution may be a solution containing one or more selected from the group consisting of sulfuric acid, hydrochloric acid, hypochlorous acid, nitric acid, carbonic acid, acetic acid, and oxalic acid.

For example, the acidic solution may have a pH of 0 to 2, preferably 0 to 1. Within this range, lithium may be selectively dissolved and recovered.

For example, the oxidizing agent may include one or more selected from the group consisting of hydrogen peroxide, sodium persulfate, potassium persulfate, ammonium persulfate, oxygen, and air containing oxygen.

FIG. 1 below is a flow chart of a method of removing aluminum from a waste cathode material and recovering waste lithium according to one embodiment of the present invention.

Referring to FIG. 1, first, a waste lithium-ion battery cathode is prepared (step S10).

The waste lithium-ion battery cathode may be a discarded lithium-ion battery cathode, a defective product generated during a cathode coating process, or cathode scrap discarded after cutting an electrode plate, preferably a discarded lithium-ion battery cathode.

The cathode has a structure in which a cathode active material layer including a cathode material and a conductive material are combined by a binder on aluminum foil.

Next, the prepared cathode of a waste lithium-ion battery is pulverized into an appropriate size (step S20).

For example, in step S20, the pulverizing may be performed using a mixer, a hand mill, a pin mill, a disc mill, a cutting mill, or a hammer mill. As a specific example, when pulverizing is performed using a mixer, the current collector pieces are chopped into small pieces and the cathode material is separated from the current collector pieces.

Crushing may be performed before pulverizing in step S20.

Here, the crushing involves cutting or shredding the cathode into easy-to-handle sizes. As a specific example, the crushed cathode may have a size of 1 cm × 1 cm. For example, the crushing may be performed using various dry crushing equipment such as a hand mill, a pin mill, a disc mill, a cutting mill, and a hammer mill. In addition, to increase productivity, the crushing may be performed using a high-speed cutter.

Preferably, in consideration of equipment used in handling the cathode and subsequent processes, whether to perform the crushing, the size of pieces, and the like may be determined. For example, when equipment capable of continuous processing is used, since high fluidity is required, the cathode must be crushed into small pieces.

Next, the pulverized cathode material is sieved to obtain cathode material powder having an olivine structure (step S30).

Through the sieving, powder having a uniform size may be obtained, and current collector pieces may be separated.

The cathode material may be preferably a cathode material having an olivine structure, more preferably lithium iron phosphate, specifically $LiFePO_4$ having an olivine structure. In this case, high-temperature stability, lifespan characteristics, and economic efficiency may be excellent.

For example, the sieving of the waste cathode may be performed using a 140- to 400-mesh sieve, specifically a 200-mesh sieve. In this case, easy handling may be achieved by separating the current collector pieces and obtaining a uniformly sized cathode active material layer powder. Furthermore, the increased surface area of the incorporated aluminum allows for selective and easy leaching of aluminum within the cathode active material layer powder in a low-concentration alkaline aqueous solution.

As a specific example, in step S30, the sieving may be performed using a sieve-equipped particle size sorter. In this case, a current collector may be separated from the pulverized waste cathode material, and thus the cathode active material layer may be obtained as a powder.

In step S30, the cathode active material layer powder obtained after sieving may have a particle size of 35 to 107 μm, specifically 65 to 84 μm. Within this range, the powder is easy to handle and mixes well with a leaching solvent. Furthermore, the increased surface area of aluminum increases the aluminum removal rate even in a low-concentration alkaline solution, thereby minimizing lithium loss and reducing the leaching time and wastewater generation.

Next, a leachate and a leaching residue are formed by leaching the obtained cathode active material layer powder in an alkaline aqueous solution (step S40).

At this time, the alkaline aqueous solution may have a molar concentration of preferably 0.06 to 0.22 mol/L, as a specific example, 0.1 mol/L. Within this range, aluminum incorporated into the cathode active material layer powder during the waste cathode pulverizing step may be selectively leached in the leachate and easily removed, thereby increasing the purity and yield of lithium.

For example, the alkaline aqueous solution may include one or more selected from the group consisting of sodium hydroxide (NaOH), potassium hydroxide (KOH), ammonium hydroxide ($NH_4OH$), and calcium hydroxide ($Ca(OH)_2$), specifically a sodium hydroxide aqueous solution. In this case, since aluminum mixed in the cathode active material layer powder is selectively leached in the leachate and easily removed, the purity of lithium may be increased.

For example, the alkaline aqueous solution may have a pH of 12 or more, specifically a pH of 12.5 to 13.5. In this case, since aluminum mixed in the cathode active material layer powder is selectively leached in the leachate and easily removed, the purity of lithium may be increased in the subsequent process.

In step S40, the solid-to-liquid ratio of the cathode active material layer powder to the alkaline aqueous solution may be, for example, 1 g/7 ml to 1 g/35 ml, specifically 1 g/10 ml. Within this range, since aluminum mixed in the cathode active material layer powder is selectively leached in the leachate and easily removed, the purity of lithium may be increased, and wastewater generation may be reduced.

In step S40, for example, leaching may be performed under stirring. Preferably, the leaching may be performed at a stirring speed of 100 to 500 rpm, specifically a stirring speed of 300 rpm. Within this range, aluminum mixed in the cathode active material layer powder may be sufficiently leached in the alkaline aqueous solution, and the leaching time may be shortened.

In step S40, for example, the leaching may be performed at a temperature of 15 to 40 °C, specifically 25 °C. Within this range, aluminum mixed in the cathode active material layer powder may be sufficiently leached in the alkaline aqueous solution and removed, and thus the purity of lithium may be increased.

In step S40, for example, the leaching may be performed for 30 minutes to 120 minutes, specifically 60 minutes. Within this range, aluminum mixed in the cathode active material layer powder may be sufficiently leached in the alkaline aqueous solution and removed, and thus the purity of lithium may be increased.

Next, the leachate and the leaching residue are separated (step S50).

For example, the separation in step S50 may be performed using reduced pressure filtration. In this case, the leachate and the leaching residue may be easily separated using a simple process, reducing process costs and providing the advantage of eco-friendliness.

The reduced pressure filtration may preferably be vacuum filtration, and specifically vacuum filtration using a filtration flask. In this case, the leachate and the leaching residue may be easily separated.

Through the separation, an aluminum-dissolved leachate (step S60) and cathode active material layer powder as a leaching residue (step S70) may be obtained. In this case, high-purity lithium may be recovered from the leaching residue, significantly improving economic efficiency.

For example, the leachate separated in step S50 may have an aluminum leaching rate of 80 % by weight, preferably 82 % by weight or more. Within this range, the purity of lithium in the subsequent process may be increased because aluminum, which is a current collector component mixed in the process of pulverizing the waste cathode, is removed.

For example, the leachate separated in step S50 may have a lithium leaching rate of 10 % by weight or less, preferably 8 % by weight or less. Within this range, lithium loss in the cathode active material layer powder is minimized, which may increase the recovery rate of lithium in subsequent processes.

Next, lithium is recovered from the leaching residue (step S70).

A step of dissolving the leaching residue separated in step S50 in a basic solution or acidic solution may be included.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

Example 1

A cathode of a waste lithium-ion battery was crushed and then pulverized using a mixer to separate a current collector. A cathode material from which the current collector had been separated was sieved using a 200-mesh sieve to obtain cathode material powder ($LiFePO_4$) having an olivine structure. As a result of performing X-ray diffraction analysis (XRD) on the obtained cathode material powder, it was confirmed that the powder had an olivine structure.

The obtained cathode material powder ($LiFePO_4$) having an olivine structure had an aluminum content of 2600 ppm as measured by ICP analysis, and had a particle size of 75 $\mu$m as measured according to sieve size.

10 g of the obtained cathode material powder ($LiFePO_4$) having an olivine structure was leached in 100 ml of a sodium hydroxide aqueous solution having a molar concentration of 0.1 mol/L at 25 °C for 60 minutes under stirring to obtain an aluminum-leached leachate and a leaching residue. At this time, the pH of the sodium hydroxide aqueous solution was 13.01, and the stirring was performed at 300 rpm. At this time, the solid-to-liquid ratio of the cathode active material layer powder to the alkaline aqueous solution was 1 g/10 ml.

The aluminum-leached leachate and the leaching residue were separated by reduced pressure filtration, and using the separated leachate, the contents of aluminum and lithium were measured by ICP analysis, and the leaching rate was calculated.

Example 2

The same procedure as in Example 1 was performed, except that the concentration of sodium hydroxide was changed to a molar concentration of 0.07 mol/L.

Example 3

The same procedure as in Example 1 was performed, except that the concentration of sodium hydroxide was changed to a molar concentration of 0.2 mol/L.

Example 4

The same procedure as in Example 1 was performed, except that 100 ml of the sodium hydroxide aqueous solution having a molar concentration of 0.1 mol/L was changed to 250 ml.

Comparative Example 1

The same procedure as in Example 1 was performed, except that the concentration of sodium hydroxide was changed to a molar concentration of 0.03 mol/L.

Comparative Example 2

The same procedure as in Example 1 was performed, except that the concentration of sodium hydroxide was changed to a molar concentration of 0.25 mol/L.

Comparative Example 3

The same procedure as in Example 1 was performed, except that 100 ml of the sodium hydroxide aqueous solution having a molar concentration of 0.1 mol/L was changed to 30 ml.

Comparative Example 4

The same procedure as in Example 1 was performed, except that 100 ml of the sodium hydroxide aqueous solution having a molar concentration of 0.1 mol/L was changed to 500 ml.

Comparative Example 5

The same procedure as in Example 1 was performed, except that the sieve was changed to 35 mesh.

Comparative Example 6

The same procedure as in Example 1 was performed, except that the sieve was changed to 100 mesh.

Comparative Example 7

The sieve in Example 1 was changed to 500 mesh, and a cathode material powder having an olivine structure was obtained. The cathode material powder was obtained in very small quantities and a large amount of pulverized cathode material remained in the sieve, so subsequent steps were not performed considering economic efficiency and productivity.

[Test Example I: Aluminum in leachate and lithium leaching rate]

The contents of aluminum-leached leachates obtained in Examples 1 to 4 and Comparative Examples 1 to 6 were measured by ICP analysis, and the results are shown in Table 1 below.
* Aluminum leaching rate (wt%) and lithium leaching rate (wt%): 0.2 g of leachate was aliquoted into a conical tube, and the exact weight thereof was measured. 0.1 ml of nitric acid with a concentration of 70 % by weight was added thereto, and 500 µl of 1000 mg/kg internal STD (Sc) was added thereto, and then the mixture was diluted to 50 ml with ultrapure water. The aluminum and lithium contents were measured using ICP analysis. In addition, the contents of aluminum and lithium contained in the cathode material powder were measured by ICP analysis as described above, and the aluminum leaching rate was calculated using Equation 1 below. The lithium leaching rate was calculated using the same method as above.

Aluminum leaching rate (wt%) = [Aluminum content in leachate (g) / Aluminum content in cathode material powder (g)] $\times$ 100                    [Equation 1]

[Table 1]

| Classification | NaOH concentration (mol/L) | Solid-to-liquid ratio | Mesh | Aluminum leaching rate (wt%) | Lithium leaching rate (wt%) |
|---|---|---|---|---|---|
| Example 1 | 0.1 | 1g/10ml | 200 | 82.6 | 5.6 |
| Example 2 | 0.07 | 1g/10ml | 200 | 85.8 | 3.9 |
| Example 3 | 0.2 | 1g/10ml | 200 | 82.5 | 6.3 |
| Example 4 | 0.1 | 1g/25ml | 200 | 85.7 | 9.3 |
| Comparative Example 1 | 0.03 | 1g/10m | 200 | 45.4 | 2.9 |
| Comparative Example 2 | 0.25 | 1g/10ml | 200 | 75.6 | 3.8 |
| Comparative Example 3 | 0.1 | 1g/3ml | 200 | 43.2 | 2.8 |
| Comparative Example 4 | 0.1 | 1g/50ml | 200 | 96.63 | 18.03 |
| Comparative Example 5 | 0.1 | 1g/10ml | 35 | 63.8 | 3.4 |
| Comparative Example 6 | 0.1 | 1g/10ml | 100 | 68.2 | 4.3 |
| Comparative Example 7 | * | - | 500 | - | - |
| -: A large amount of the pulverized material of the cathode active material layer was discarded during the sieving step, which reduces economic efficiency and productivity, so subsequent steps were not performed. | | | | | |

As shown in Table 1, for Examples 1 to 4 according to the present invention, the aluminum leaching rate in the leachate was 80 % by weight or more, and the lithium leaching rate was 10 % by weight or less. That is, Examples 1 to 4 exhibited a higher aluminum leaching rate and a lower lithium leaching rate than Comparative Examples 1 to 6. From these results, it was confirmed that aluminum mixed in the cathode active material layer powder was cleanly removed by leaching in an alkaline solution, and lithium was not leached, so lithium could be recovered with high yield from the leaching residue.

Specifically, in Comparative Examples 1 and 2, where the concentration of sodium hydroxide solution was 0.03 molar concentration or 0.25 molar concentration, the aluminum leaching rate was low. For Comparative Example 4, where the solid-to-liquid ratio was 1 g/3 ml, stirring was not performed well and the aluminum leaching rate was low. In Comparative Example 4, where the solid-to-liquid ratio was 1 g/50 ml, the aluminum leaching rate was high, but the lithium leaching rate also increased rapidly, so it was expected that the lithium recovery rate would decrease. In addition, for Comparative Examples 5 and 6, where sieving was performed with 35 mesh and 100 mesh, the aluminum leaching rate decreased due to the reduced surface area of aluminum. In particular, in Comparative Example 5, where sieving was performed with 35 mesh, the aluminum leaching rate decreased further.

Claims

1.  A method of removing aluminum from a waste cathode material, comprising:

    (a) pulverizing a waste cathode coated with a cathode active material layer containing a cathode material with an olivine structure on a current collector;
    (b) obtaining the cathode active material layer as a powder by sieving the pulverized waste cathode through a 140- to 400-mesh sieve;
    (c) forming a leachate and a leaching residue by leaching the obtained cathode active material layer powder in an alkaline aqueous solution having a molar concentration of 0.06 to 0.22 mol/L; and
    (d) separating the leachate and the leaching residue,

    wherein, in step (c), a solid-to-liquid ratio of the cathode active material layer powder to the alkaline aqueous solution is 1 g/7 ml to 1 g/35 ml.

2.  The method according to claim 1, wherein the cathode material having an olivine structure is a compound represented by Chemical Formula 1 below.

    [Chemical Formula 1]             $Li_{1+a}Fe_{1-b}M_b(PO_{4-c})X_c$

    wherein M comprises one or more elements selected from the group consisting of Al, Mg, Ni, Co, Mn, Ti, Ga, Cu, V, Nb, Zr, Ce, In, Zn, and Y; X comprises one or more elements selected from the group consisting of F, S, and N; and a, b, and c are $-0.5{\leq}a{\leq}0.5$, $0{\leq}b{\leq}0.5$, and $0{\leq}c{\leq}0.1$, respectively.

3.  The method according to claim 2, wherein the cathode material having an olivine structure comprises lithium iron phosphate.

4.  The method according to claim 1, wherein the pulverizing in step (a) is performed using a hand mill, a pin mill, a disc mill, a cutting mill, a hammer mill, a mixer, or a blender.

5.  The method according to claim 1, wherein the sieving in step (b) is performed using a sieve-equipped particle size sorter.

6.  The method according to claim 1, wherein the cathode active material layer powder obtained in step (b) has a particle size of 35 to 107 $\mu$m.

7.  The method according to claim 1, wherein the alkaline aqueous solution in step (c) comprises one or more selected from the group consisting of sodium hydroxide (NaOH), potassium hydroxide (KOH), ammonium hydroxide ($NH_4OH$), and calcium hydroxide ($Ca(OH)_2$).

8.  The method according to claim 1, wherein the alkaline aqueous solution has a pH of 12 or more.

9.  The method according to claim 1, wherein the leaching in step (c) is performed at a stirring speed of 100 to 500 rpm.

10. The method according to claim 1, wherein the leaching in step (c) is performed at a temperature of 15 to 40 °C.

11. The method according to claim 1, wherein the leaching in step (c) is performed for 30 minutes to 120 minutes.

12. The method according to claim 1, wherein separation of the leachate and the leaching residue in step (d) is performed using reduced pressure filtration.

13. The method according to claim 1, wherein, in step (d), the separated leachate has an aluminum leaching rate of 80 % by weight or more and a lithium leaching rate of 10 % by weight or less.

14. The method according to claim 1, comprising (e) recovering lithium from the leaching residue separated in step (d).

[FIG. 1]

```
S10 ─┐  ┌──────────────────────────────┐
     └──┤        WASTE CATHODE          │
        └──────────────────────────────┘
                       │
                       ▼
S20 ─┐  ┌──────────────────────────────┐
     └──┤         PULVERIZING           │
        └──────────────────────────────┘
                       │
                       ▼
S30 ─┐  ┌──────────────────────────────┐
     └──┤           SIEVING             │
        └──────────────────────────────┘
                       │
                       ▼
S40 ─┐  ┌──────────────────────────────┐
     └──┤  LEACHING IN ALKALINE         │
        │  AQUEOUS SOLUTION             │
        └──────────────────────────────┘
                       │
                       ▼
S50 ─┐  ┌──────────────────────────────┐
     └──┤         SEPARATION            │
        └──────────────────────────────┘
                       │
          ┌────────────┴────────────┐
          ▼                         ▼
S60 ─┐ ┌──────────────────┐   ┌──────────────────┐ ┌─ S70
     └─┤ AL-DISSOLVED      │   │ LEACHING RESIDUE │─┘
       │ LEACHATE          │   └──────────────────┘
       └──────────────────┘            │
                                        ▼
                               LITHIUM RECOVERY
```

TRANSLATION

## INTERNATIONAL SEARCH REPORT

| International application No. |
|---|
| **PCT/KR2025/012560** |

| A. | CLASSIFICATION OF SUBJECT MATTER |
|---|---|

**H01M 10/54**(2006.01)i; **C22B 3/12**(2006.01)i; **C22B 3/22**(2006.01)i; **C22B 21/00**(2006.01)i; **C22B 26/12**(2006.01)i; **B02C 23/16**(2006.01)i; **H01M 4/58**(2010.01)i

According to International Patent Classification (IPC) or to both national classification and IPC

| B. | FIELDS SEARCHED |
|---|---|

Minimum documentation searched (classification system followed by classification symbols)

H01M 10/54(2006.01); B02C 23/08(2006.01); C22B 3/04(2006.01); C22B 7/00(2006.01); H01M 10/0525(2010.01); H01M 4/136(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 리튬이온전지(lithium ion battery), 폐양극재(waste cathode material), 알루미늄 (aluminium), 재활용(recycling), 침출(leaching)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0013809 A (LG ENERGY SOLUTION, LTD.) 04 February 2022 (2022-02-04) claims 1, 11, 14, 15; paragraphs [0072]-[0080], [0105], [0136], [0157]; reference examples 3, 4; example 10; table 11 | 1-14 |
| A | CN 102162034 A (CHANGZHOU KTK-BOFAN ENERGY NEW MATERIAL CO., LTD. et al.) 24 August 2011 (2011-08-24) claims 1-9 | 1-14 |
| A | CN 111430829 A (CENTRAL SOUTH UNIVERSITY et al.) 17 July 2020 (2020-07-17) claim 1 | 1-14 |
| A | CN 110828887 A (WUHAN RUIJIETE MATERIAL CO., LTD.) 21 February 2020 (2020-02-21) claims 1-10 | 1-14 |
| A | WO 2015-111761 A1 (ENERGY MATERIAL TECHNOLOGY CO., LTD.) 30 July 2015 (2015-07-30) claims 1-15 | 1-14 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 November 2025** | **22 November 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2025/012560**

| Patent document cited in search report | | | Publication date (day/month/year) | Patent family member(s) | | | Publication date (day/month/year) |
|---|---|---|---|---|---|---|---|
| KR | 10-2022-0013809 | A | 04 February 2022 | CN | 115152078 | A | 04 October 2022 |
| | | | | EP | 4095983 | A1 | 30 November 2022 |
| | | | | JP | 2023-521497 | A | 24 May 2023 |
| | | | | JP | 7621709 | B2 | 27 January 2025 |
| | | | | US | 2023-0099073 | A1 | 30 March 2023 |
| | | | | WO | 2022-025600 | A1 | 03 February 2022 |
| CN | 102162034 | A | 24 August 2011 | | None | | |
| CN | 111430829 | A | 17 July 2020 | CN | 111430829 | B | 29 June 2021 |
| CN | 110828887 | A | 21 February 2020 | | None | | |
| WO | 2015-111761 | A1 | 30 July 2015 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240111100
- KR 1020250114142
- KR 20070112278 A